Europäisches Patentamt

European Patent Office

Office européen des brevets

(11) Veröffentlichungsnummer: **0 041 096**
**B1**

(12) **EUROPÄISCHE PATENTSCHRIFT**

(45) Veröffentlichungstag der Patentschrift:
27.12.84

(21) Anmeldenummer: 81100939.8

(22) Anmeldetag: 11.02.81

(51) Int. Cl.³: **B 60 D 1/14**, A 01 B 59/043,
F 16 C 7/06, B 62 D 49/06,
F 15 B 15/20

─────────────────────────────────────────────────

(54) **Verstellbarer Oberlenker einer Dreipunktaufhängevorrichtung an einem Schlepper.**

─────────────────────────────────────────────────

(30) Priorität: 03.06.80 DE 3020947

(43) Veröffentlichungstag der Anmeldung:
09.12.81 Patentblatt 81/49

(45) Bekanntmachung des Hinweises auf die Patenterteilung:
27.12.84 Patentblatt 84/52

(84) Benannte Vertragsstaaten:
AT BE DE FR GB IT LU NL SE

(56) Entgegenhaltungen:
DE - A - 2 403 079
DE - A - 2 737 169
DE - A - 2 807 758
DE - B - 1 195 079
DE - B - 1 557 824
DE - U - 7 837 172
FR - A - 1 148 609
FR - A - 1 502 306
GB - A - 2 021 695
US - A - 2 429 761
US - A - 2 589 896
US - A - 3 077 179
US - A - 3 376 051
US - A - 3 905 425

(73) Patentinhaber: **Conrad, Ernst, im Westfeld 13,
D-3101 Nienhagen (DE)**

(72) Erfinder: **Conrad, Ernst, Im Westfeld 13,
D-3101 Nienhagen (DE)**

(74) Vertreter: **Junius, Walther, Dr., Wolfstrasse 24,
D-3000 Hannover 81 (DE)**

─────────────────────────────────────────────────

**Beschreibung**

Die Erfindung betrifft einen verstellbaren Oberlenker einer Dreipunktaufhängevorrichtung an einem Schlepper mit einer aus einem doppeltwirkenden Hydraulikzylinder und einer vom Schleppersitz aus mittels eines Betätigungshebels bedienbaren Absperrvorrichtung versehenen, die beiden Stirnseiten des Hydraulikzylinders verbindenden Leitung bestehenden Arretierungsvorrichtung.

Dieser verstellbare Oberlenker ist aus dem DE-U 7 837 172 bekannt geworden. Man kann durch Öffnen der Absperrvorrichtung die Länge des Oberlenkers verstellen und hierbei verschiedenen Anbaugeräten für den Schlepper, bei einem Anbaugerät auch verschiedenen Arbeitslagen des Anbaugerätes, anpassen. Nach Absperrung der Absperrvorrichtung ändert sich die eingestellte Länge des Oberlenkers auch bei erheblichen Stössen nicht mehr.

Wenn beim Anhängen eines Anbaugerätes die Länge des Oberlenkers zu verstellen ist, muss der Schlepperfahrer vom Schleppersitz absteigen, um den Handgriff am Ventil zu betätigen, es sei denn, er hätte gemäss der DE-A 2 807 758 ein verstellbares Zugorgan am Ventilbetätigungshebel angebracht, das diesen Hebel aber nur in einer Richtung zu bewegen vermag und das den Nachteil aufweist, dass beim Betätigen des Zugorganes eine Hand des Schlepperfahrers zum Ziehen benötigt wird. Vom Schleppersitz absteigen muss er auch, um die Hakenmaulsperre, die aus der FR-A 1 502 306 und der DE-B 1 557 824 bekannt geworden ist, mittels eines Handgriffes verschieben. Da der als Hakenmaulsperre dienende Bolzen unter der Kraft einer Feder steht, ist der diesen Bolzen betätigende Hebel so lange zu betätigen, wie das Hakenmaul geöffnet sein soll, es sei denn, es wäre eine komplizierte Vorrichtung für das Halten des Bolzens in Offenstellung vorgesehen. Die Notwendigkeit der Betätigung der Absperrvorrichtung und der Hakenmaulsperre erfordert das Tätigsein einer Person an dem verstellbaren Oberlenker während des Anhängens eines Anbaugerätes. Ist diese Person der Schlepperfahrer, so hat er während des Anhängens des Anbaugerätes schwere körperliche Arbeit zu leisten. Um diese zu vermeiden, wird er unter Zuhilferufen einer zweiten Person selbst auf dem Schleppersitz sitzen und von hier aus seine Dreipunkthydraulik betätigen, während die Hilfsperson die Hebel der Absperrvorrichtung und der Hakenmaulsperre betätigt. Das aber kann zu schweren Unfällen der Hilfsperson führen, wenn die Dreipunkthydraulik vom Schlepperfahrer ungeschickt betätigt wird, das durchaus ohne dessen Verschulden vorkommen kann, weil die Hilfsperson ihm zumindest teilweise die Sicht auf die aneinanderzukoppelnden Teile versperrt.

Es ist die Aufgabe der Erfindung, eine Bedienungsvereinfachung zu schaffen, die es ermöglicht, beim Anbauen und Abhängen des Arbeitsgerätes vom Schleppersitz aus beide Hände frei zu behalten.

Die Erfindung besteht darin, dass die Absperrvorrichtung ein Kugelhahn ist, dessen die Kugel tragende Achse mit einem Betätigungshebel verbunden ist, dass an dem Betätigungshebel Federn angreifen, die den Betätigungshebel in die Absperrstellung ziehen und dass eine lösbare, als Schnapper ausgebildete Arretierungsvorrichtung für den in die Offenstellung eingestellten Betätigungshebel vorgesehen ist.

Wenn die Absperrvorrichtung ein Kugelhahn ist, ist eine exakte Abdichtung der Leitung zwischen den beiden Stirnseiten des Hydraulikzylinders erreichbar, so dass der Oberlenker nach seiner Einstellung seine Länge nicht ändert. Durch die Verwendung eines Kugelhahnes ist aber auch eine Bedienungsvereinfachung dadurch geschaffen, dass für die Betätigung der Absperrvorrichtung nur ein Drehen der Kugel in dem Kugelhahn notwendig ist. Diese Drehung erfolgt mit einem gabelförmigen Betätigungshebel, den der Schlepperfahrer von seinem Sitz aus ergreifen kann, wenn deren Stiel lang genug ausgeführt ist. Dieser Betätigungshebel wird von einer Feder in die Absperrstellung gezogen, damit auch in dem rauhen Schlepperbetrieb ohne eine Handbetätigung die Gabel und damit die Kugel in der Absperrstellung verbleibt.

Weiter lässt sich die Bedienung dadurch vereinfachen, dass an dem gabelförmigen Betätigungshebel ein Zugseil befestigt ist, welches in das Fahrerhaus des Schleppers geführt ist und dort im unmittelbaren Greifbereich des Schlepperfahrers liegt.

Während des Anbau- bzw. Anhängevorganges von Arbeitsgeräten am Schlepper muss der Kugelhahn in geöffneter Stellung gehalten werden, damit die richtige Länge des Oberlenkers eingestellt werden kann. Dieses Halten des Kugelhahnes in Offenstellung erfolgt mit dem Betätigungshebel, z.B. durch einen Zug an dem Seil, das am Betätigungshebel angebracht ist. Nun ist es für die Arbeiten des Anbauens bzw. des Anhängens des Arbeitsgerätes vorteilhaft, wenn man während dieser Arbeiten nicht immer an dem Seil ziehen muss, sondern sich der Betätigungshebel für diese Arbeiten solange so einstellen lässt, dass der Kugelhahn geöffnet bleibt. Dieses lässt sich dadurch erreichen, dass eine Arretiervorrichtung für den in die Offenstellung des Kugelhahnes eingestellten Betätigungshebels vorgesehen ist.

Vorteilhaft ist es, wenn die Arretierungsvorrichtung aus einem am Betätigungshebel angebrachten Bügel und einem unter der Kraft einer Feder verschwenkbaren Haken besteht, dessen Maul in der Arretierstellung über den Bügel fasst und der an dem Hydraulikzylinder oder an dem Gehäuse des Kugelhahnes angebracht ist, wobei die an das Maul anschliessende Fläche des Hakens gekrümmt ist. Eine derartige Arretiervorrichtung ist einfach herstellbar und sehr wirkungsvoll. Durch einen einfachen Zug am Seil wird auf diese Weise der Betätigungshebel in eine Stellung geschwenkt, in der sein Bügel vom Haken erfasst und festgehalten wird.

Damit nun zur Entarretierung auch ein weiterer einfacher Zug am Seil bzw. ein weiteres Verschwenken des Betätigungshebels ausreicht, ist es zweckmässig, die Arretiervorrichtung so zu bauen, dass der verschwenkbare Haken eine zwischen zwei Stellungen verschwenkbare Wippe trägt, die eine Ausnehmung aufweist, die ebenfalls ein den Bügel in ihrer einen Stellung aufnehmendes Maul bildet und die eine Kante aufweist, die in der anderen Stellung das Maul des Hakens verschliesst und eine Gleitfläche für den Bügel bildet.

Dabei ist es aus Gründen einer einfachen Bauweise, aber auch einer sicheren Wirkungsweise zweckmässig, wenn sich eine Seitenfläche des Maules der Wippe und die Kante des Maules des Hakens, an die sich der Bügel unter der Kraft der Feder anlegt, in der Fangstellung decken.

Weiterhin wird die Bedienung erleichtert, wenn eine Verlängerung des verstellbaren Oberlenkers langsamer vor sich geht als eine Verkürzung des Oberlenkers. Denn soll beispielsweise ein an der Dreipunktaufhängung hängendes Arbeitsgerät durch eine Verlängerung des verstellbaren Oberlenkers abgesetzt werden, so ist es vorteilhaft für die Bedienung, wenn diese Verlängerung nur langsam erfolgt, damit das Gerät beim Absetzen nicht hart auf den Boden aufschlägt. Die unterschiedliche Geschwindigkeit der Verstellung des Oberlenkers lässt sich dadurch erreichen, dass in einer Erweiterung der Leitung zum Kugelhahn eine Drosselscheibe eingelegt ist, die zentral eine feine Bohrung und auf einer Stirnseite Ansätze aufweist, und für die in der Erweiterung ein Dichtungssitz ausgebildet ist, der auf der den Ansätzen der Drosselscheibe abgewandten Seite ausgebildet ist, wobei der Dichtungssitz in der Flussrichtung des Druckmediums liegt, wenn es beim Verlängern der Länge des Oberlenkers fliesst. Eine Drosselung der Druckmediumzufuhr lässt sich beispielsweise mit Arbeitsmitteln ausführen, die aus der DE-A 2 403 079 bekannt geworden sind.

Zur Sicherung des angebauten bzw. angehängten Gerätes ist es vorteilhaft, wenn auch hier eine Arretierung vorgesehen wird. Das erfolgt erfindungsgemäss derart, dass der Befestigungshaken mit einer Bohrung versehen ist, in der ein unter der Kraft einer Feder vor das Maul des Befestigungshakens geschobener Verschlussbolzen verschiebbar gelagert ist.

Baulich lässt sich diese Ausführung besonders vorteilhaft dadurch gestalten, dass der Verschlussbolzen auf der dem Maul des Befestigungshakens abgewandten Seite einen Griff trägt, der an einem Ende eines Lenkers oder Bügels angebracht ist, welcher verschwenkbar am Ende des Verschlussbolzens gelagert ist und in seiner Länge auf der dem Griff abgewandten Seite so bemessen ist, dass er in einer Stellung parallel zum Verschlussbolzen steht und dessen freies Ende in einer Stellung hält, in der das Maul des Befestigungshakens geöffnet ist.

Auf diese Weise ist eine Möglichkeit der Arretierung geschaffen, die im entarretierten Zustand ohne menschliche Kraft lediglich durch Verstellung eines Lenkers bzw. Bügels gehalten wird.

Bei der Ausführung mit einem Bügel ist es zweckmässig, wenn die Enden des Bügels von einem seitlich angebrachten Verbindungsstück überbrückt sind. Hierdurch wird eine hohe Stabilität erreicht.

Baulich wird diese Ausführung sehr einfach, wenn die Bohrung im Befestigungshaken und der Verschlussbolzen abgesetzt sind und zwischen den Absetzungen eine Druckfeder aufnehmen.

Als besonders vorteilhaft hat sich eine Ausführungsform erwiesen, bei der der Lenker oder Bügel an seinem dem Griff abgewandten Ende eine Walze trägt, deren Achse parallel zur Achse des Lagers angeordnet ist und bei der das Lager des Lenkers oder Bügels mit einem am Verschlussbolzen befestigten Stein ausserhalb der Achse des Verschlussbolzens untergebracht ist, wobei der Abstand der Achse des Lagers von der Achse des Verschlussbolzens grösser oder gleich dem Abstand der Achse der Walze von der Achse des Verschlussbolzens ist, wenn die Walze am Verschlussbolzen anliegt. Auf diese Weise ist eine einfache Möglichkeit der Selbsthaltung in der Entarretierstellung des Verschlussbolzens gesichert.

Diese Ausführungsform kann noch dadurch verbessert werden, dass am Befestigungshaken eine Kerbe neben dem Verschlussbolzen angebracht ist, in die die Walze einfällt.

Aus Gründen einer erleichterten Montage, aber auch um eine leichte Einstellmöglichkeit zu schaffen, ist es zweckmässig, wenn der Verschlussbolzen ein Gewinde trägt und wenn der Stein mittels dieses Gewindes an dem Verschlussbolzen befestigt ist. Das kann z.B. dadurch erfolgen, dass der Stein eine Bohrung aufweist, die ein dem Aussengewinde des Verschlussbolzens entsprechendes Innengewinde trägt. Der Stein wird dann auf das Gewinde des Verschlussbolzens aufgeschraubt und durch eine Kontermutter gesichert.

Zur erleichterten Handhabung des Oberlenkers ist es zweckmässig, wenn die Kolbenstange beidseitig die Stirnseiten des Hydraulikzylinders durchsetzt und auf einer Seite ein Befestigungsmittel, vorzugsweise einen Haken, trägt und auf der anderen Seite in einem geschlossenen Rohrstück untergebracht ist, welches an der einen Stirnseite des Hydraulikzylinders luftdicht befestigt und auf der abgelegenen Seite ein weiteres Befestigungsmittel, vorzugsweise ein Gelenk oder einen Haken, trägt, wenn dieses Rohrstück mit Druckluft gefüllt ist und wenn es ein Füllventil aufweist. Dann schiebt nämlich die Druckluft die Kolbenstange in eine Richtung und erleichtert dadurch die Anpassung der Oberlenkerlänge an den erforderlichen Abstand zwischen Schlepper und angehängtem Gerät.

Das Wesen der vorliegenden Erfindung ist nachstehend anhand von in der Zeichnung schematisch dargestellten Ausführungsbeispielen näher erläutert.

Es zeigen:

Fig. 1 eine Ausführung mit Rollbandmass in Seitenansicht.

Fig. 2 eine Ausführung mit Rollbandmass in Ansicht von oben.

Fig. 3 eine Ausführung mit in einer Führung verschiebbarem Massstab in Seitenansicht.

Fig. 4 eine Ausführung mit in einer Führung verschiebbarem Massstab in Ansicht von oben.

Fig. 5 eine Seitenansicht einer Ausführung mit in Ösen verschobenem Massstab.

Fig. 6 eine Ansicht von oben.

Fig. 7 eine Seitenansicht einer Ausführungsform mit einem über eine Feder verschobenen Zeiger.

Fig. 8 eine Seitenansicht.

Fig. 9 einen Querschnitt durch die Drosselstelle in der Zuleitung zum Kugelhahn.

Fig. 10 eine vergrösserte Ansicht dieser Drosselscheibe.

Fig. 11 eine Seitenansicht einer weiteren Ausführungsform.

Fig. 12 eine Ansicht von oben auf die Ausführungsform der Fig. 11.

Fig. 13 eine Ausführungsform des Oberlenkers mit einer Vorrichtung zur Arretierung des Betätigungshebels in der geschlossenen Stellung. In dieser Figur befindet sich die Arretiervorrichtung ausser Tätigkeit.

Fig. 14 den Oberlenker der Fig. 13 mit in Offenstellung arretiertem Betätigungshebel.

Fig. 15 den Oberlenker der Fig. 13 in einer Stellung des Betätigungshebels für die Entarretierung.

Fig. 16 eine Ansicht des. Hakens der Arretiervorrichtung.

Fig. 17 eine Ansicht der Wippe der Arretiervorrichtung.

Fig. 18 die zusammengesetzte Arretiervorrichtung in einer Stellung ausser Betrieb.

Fig. 19 die Arretiervorrichtung mit arretiertem Bügel des Betätigungshebels.

Fig. 20 die Arretiervorrichtung in der Entarretierstellung.

Fig. 21 die Arretiervorrichtung in der Stellung beim Zurückbewegen des Bügels.

Fig. 22 einen Schnitt durch den Befestigungshaken mit Verschlussbolzen in Arretierstellung.

Fig. 23 einen Schnitt durch den Befestigungshaken in entarretierter Stellung.

Fig. 24 eine Ansicht eines anderen Befestigungshakens mit Verschlussbolzen in Arretierstellung.

Fig. 25 einen Schnitt durch den Gegenstand der Fig. 24 in entarretierter Stellung.

Der Oberlenker der Dreipunktaufhängevorrichtung eines Schleppers besteht aus dem doppeltwirkenden Hydraulikzylinders 1, an den eine Hülse 2 angeflanscht ist, die an ihrem Ende ein Auge 3 oder eine Gabel für eine Befestigung an einem Lagerpunkt am Schlepper aufweist. In dem Hydraulikzylinder 1 ist die Kolbenstange 4 verschiebbar, die sich im allgemeinen noch bis in die Hülse 2 hinein erstreckt. Diese trägt an ihrem Ende einen Haken 5 für die Befestigung des anzuhängenden Arbeitsgerätes. Die beiden Stirnseiten des Hydraulikzylinders sind durch eine Leitung 6 miteinander verbunden, die durch einen Kugelhahn 7 absperrbar ist. Dieser Kugelhahn 7 weist eine Welle 8 auf, an der die Kugel befestigt ist. An dieser Welle 8 ist für die Verdrehung der Kugel ein gabelförmiger Betätigungshebel 9 befestigt, an dessen Ende ein Seil 10 angreift, welches in das Fahrerhaus des Schleppers geführt ist. An dem gabelförmigen Betätigungshebel 9 sind zwei Ansätze 11 angebracht, an denen zwei Schraubenfedern 12 angreifen, die die Gabel 11 in ihre Arretierstellung ziehen.

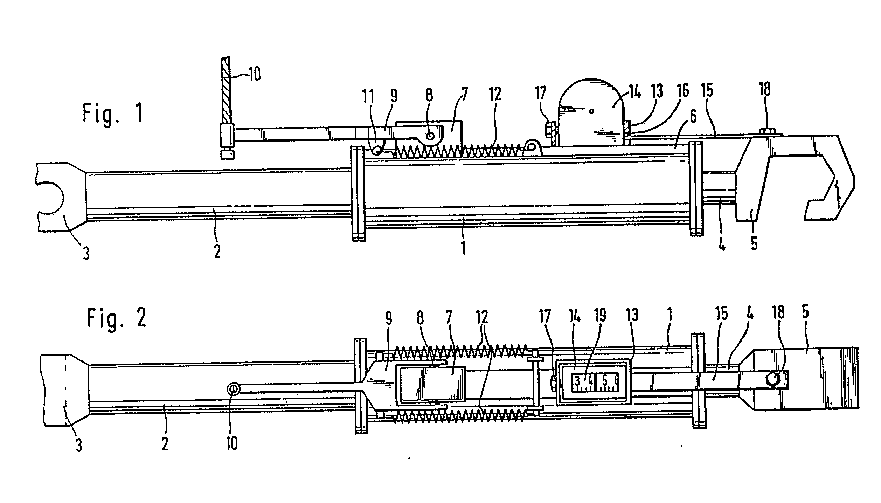

Im Ausführungsbeispiel der Fig. 1 und 2 ist am Hydraulikzylinder 1 ein Kasten 13 angebracht, der ein Bandmass 14 aufnimmt. Damit der rollbare Massstab 15 aus diesem Kasten heraustreten kann, ist eine Öffnung 16 im Kasten vorgesehen, damit das Gehäuse 14 in dem Kasten 13 einen festen Sitz hat, ist das Gehäuse 14 mittels der Schraube 17 an die der Schraube 17 gegenüberliegende Wand des Kastens angedrückt. Der rollbare Massstab 15 ist mittels der Schraube 18 an dem Haken 5 befestigt. Da das Gehäuse 14 nach oben hin ein Ablesefenster 19 aufweist, ist eine leichte Ablesemöglichkeit gesichert.

Da der Haken 5 sich während des Betriebes etwas verschwenken kann, nämlich um ±15° etwa, ist die Verwendung eines aufrollbaren Bandmasses sehr geeignet, weil das rollbare Bandmass 15 ausreichend flexibel ist, um ohne Schaden derartige Verdrehungen des Hakens 5 aufnehmen zu können. Durch die Anordnung des Gehäuses 14 des rollbaren Bandmasses 15 in dem Kasten 13 ist eine leichte Austauschmöglichkeit gegeben. Für den Austausch brauchen lediglich die Schrauben 17 und 18 gelockert und anschliessend nach dem Austausch wieder festgezogen zu werden.

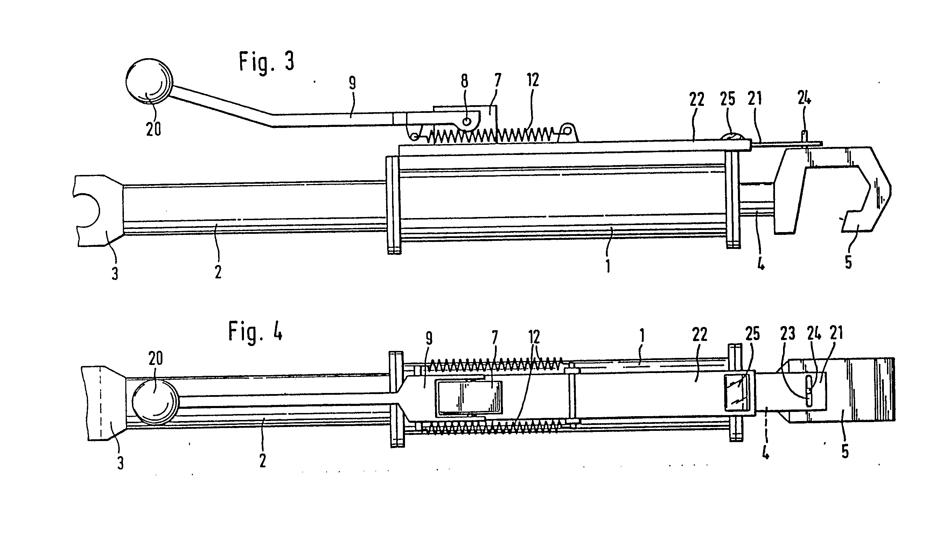

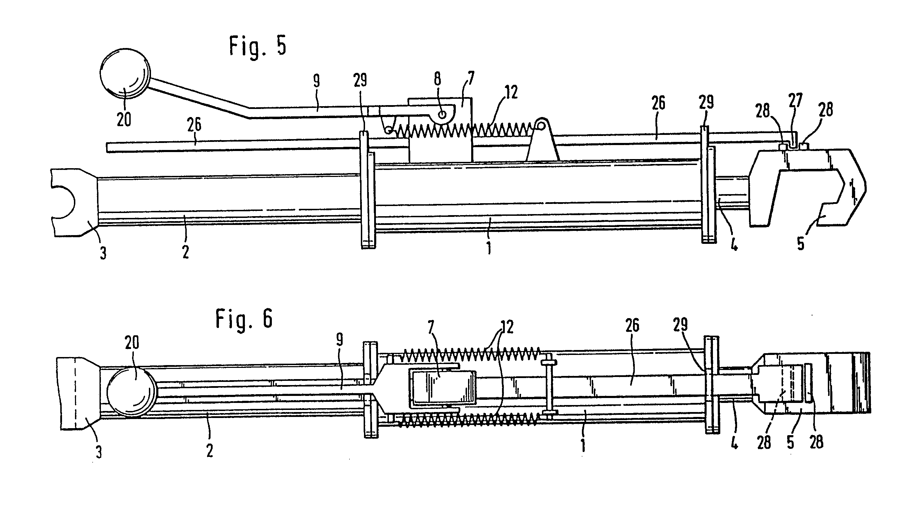

Beim Ausführungsbeispiel der Fig. 3 und 4 ist am Ende des Betätigungshebels 9 ein Handgriff in Form einer Kugel 20 angebracht, die der Fahrer des Schleppers anfasst und anhebt, um den Kugelhahn 7 aus der Arretierstellung in die Offenstellung zu bringen, um hierdurch eine Längenänderung des Oberlenkers zu ermöglichen.

In diesem Ausführungsbeispiel ist ein verschiebbarer Massstab 21 verwendet, der die Form eines Flacheisens hat und der in der Führung 22 ein- und ausschiebbar ist. Dieser Massstab weist an seinem Ende ein Langloch 23 auf, durch das ein Stift 24 hindurchgreift, der an dem Haken 5 befestigt ist. Die Ablesung wird durch eine oberhalb des Massstabes 21 angeordnete Zylinderlinse 25 erleichtert.

Im Ausführungsbeispiel der Fig. 5 und 6 ist der Massstab 26 als ein im Querschnitt quadratischer oder rechteckförmiger Stab ausgebildet, der an seinem Ende einen Ansatz 27 aufweist, der in eine Nut 28 am Haken 5 eingreift. Diese Nut 28 dient ebenfalls der flexiblen Befestigung derart, dass der Massstab 26 mit seinem Ende axial unverschiebbar an der Kolbenstange 4 über dem Haken 3 befestigt ist, Drehbewegungen der Kolbenstange und damit des Hakens 5 jedoch zulässt. Dieser Massstab 26 ist in zwei Ösen 29 geführt, die am Hydraulikzylinder 1 befestigt sind. Auch hier können, ebenso wie bei den anderen Ausführungsbeispielen, Ablesehilfen in Form von Linsen 25 vorgesehen sein.

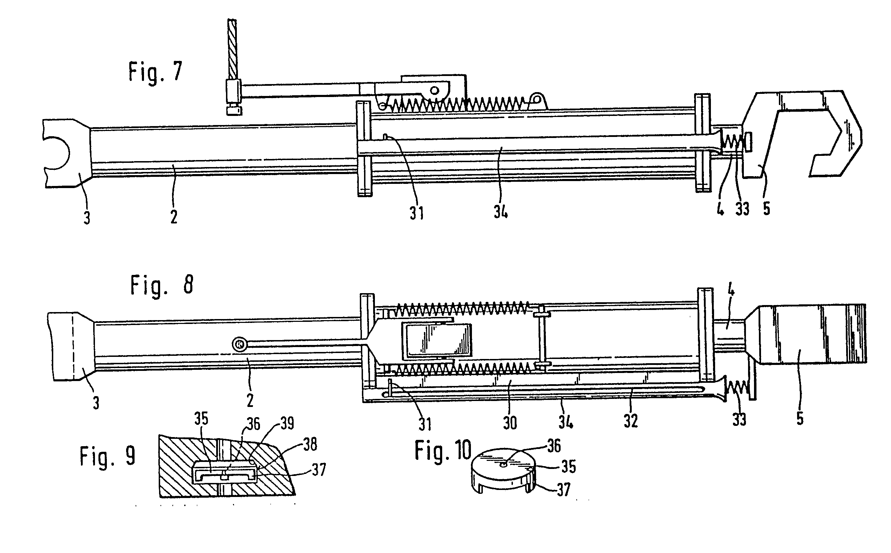

Im Ausführungsbeispiel der Fig. 7 und 8 ist der Massstab 30 fest am Hydraulikzylinder 1 befestigt. Längs des Massstabes 30 ist ein Zeiger 31 verschiebbar in einer Führung 32 gelagert. Dieser Zeiger 31 ist mit der Kolbenstange über eine Feder 33 verbunden. Diese Verbindung erfolgt wiederum dadurch, dass die Feder 33 an dem von der Kolbenstange 4 getragenen Haken 5 befestigt ist. Für die Feder 33 ist eine rohrförmige Führung 34 vorgesehen, die an ihrem dem Haken 5 zugewandten Ende aufgeweitet ist, damit auch eine sich biegende Feder einwandfrei den Zeiger 31 verschiebt.

Die Drosselung des Ölflusses in der einen Richtung wird mittels einer Scheibe 35 erreicht, die in ihrem mittleren Bereich mindestens eine feine Bohrung 36 aufweist und an ihrer einen Stirnseite Ansätze 37 trägt. Die Erweiterung 38 weist in der in den Kugelhahn 7 führenden Leitung einen Sitz 39 auf. Dieser Dichtungssitz liegt in der Flussrichtung des Druckmediums, wenn es beim Verlängern der Länge des Oberlenkers fliesst. Hierdurch wird bei einem Verlängern der Länge des Oberlenkers die Druckflüssigkeit gezwungen, über die enge Bohrung 36 zu fliessen, weil die Scheibe 35 in ihrem Sitz 39 sitzt, so dass über den Rand der Scheibe 35 kein Drucköl fliessen kann. In umgekehrter Richtung hingegen verschliesst die Scheibe 35 die Leitung nicht, weil die Ansätze 37 die Scheibe im Abstand von dem Einfluss in die Leitung halten, so dass Drucköl um den Rand der Scheibe 35 herumfliessen kann und zwischen den Ansätzen 37 hindurch in die Leitung fliessen kann.

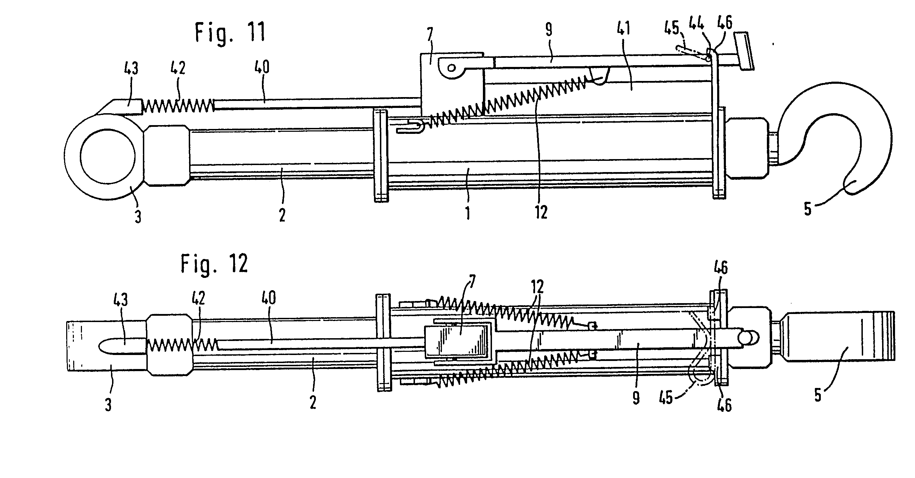

In dem Ausführungsbeispiel der Fig. 11 und 12 ist eine weitere Ausführungsform dargestellt. Hier ist der Massstab ein langgestrecktes Metallstück 40, welches in eine Führung 41 einschiebbar ist, die gleichzeitig als Abdeckung für Hydraulikleitungen dient und die das Gehäuse des Kugelhahnes 7 trägt. Am anderen Ende ist der Massstab 40 über eine Schraubenfeder 42 mit einem Ansatz 43 an dem Lagerauge 8 befestigt. Durch die Verwendung der Schraubenfeder 42 ist gewährleistet, dass sich das Lagerauge 3 gegenüber dem Haken 5 axial verdrehen kann, ohne dass hierdurch der Massstab 40 beschädigt wird. Statt der Schraubenfeder 42 kann auch ein Gummistück als Ausgleichselement verwendet werden.

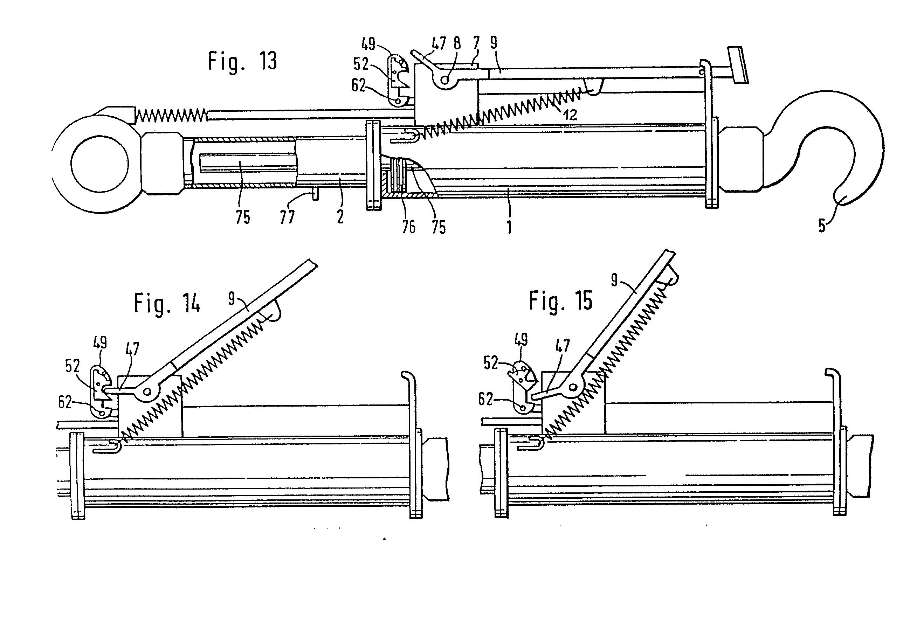

Zur Arretierung des den Kugelhahn in seinem Gehäuse 7 betätigenden gabelförmigen Betätigungshebels 9 kann ein Federstecker 45 verwendet werden, der durch ein Loch 44 in dem Stiel der Gabel 9 mit seinem geraden Teil gesteckt ist, welches in dieser Stellung hinter die Haken 46 fasst, die an dem Hydraulikzylinder 1 befestigt sind. Der gekrümmte Teil des Federsteckers 45 greift mit seinem dem geraden Teil benachbarten Abschnitt in den Zwischenraum zwischen den beiden Haken 46, wodurch seine Lage und Stellung gesichert ist. An dem Hydraulikzylinder 1 ist das Gehäuse für den Kugelhahn 7 befestigt. An diesem ist schwenkbar um die Achse 8 der Betätigungshebel 9 angebracht. Dieser Betätigungshebel 9 trägt in Fig. 13 einen Bügel 47, der für eine Arretierung des Betätigungshebels 9 dient. Diese Arretiervorrichtung besteht aus einem um den Zapfen 62 verschwenkbaren Haken 49, der mit einer Feder 48 in Richtung auf das Gehäuse des Kugelhahnes 7 gedrückt wird. Der Zapfen 62 ist am Hydraulikzylinder 1 oder am Gehäuse des Kugelhahnes 7 gelagert und durchsetzt das Loch 63 im verschwenkbaren Haken 49. Die bauliche Ausgestaltung ist so erfolgt, dass die Arretiervorrichtung aus einem am Betätigungshebel 9 angebrachten Bügel 47 und einem unter der Kraft einer Feder 48 verschwenkbaren Haken 49 besteht, dessen Maul 50 in der Arretierstellung über den Bügel 47 fasst und der an dem Hydraulikzylinder 1 oder an dem Gehäuse des Kugelhahnes 7 angebracht ist, wobei die an das Maul 50 anschliessende Fläche 51 des Hakens 49 gekrümmt ist. Diese gekrümmte Fläche 51 dient dazu, dass der Bügel 47 beim Verschwenken des Betätigungshebels 9 den Haken 49 entgegen der Kraft der Feder 48 verschwenkt, so dass nach dieser Verschwenkung das Maul 50 über den Bügel 47 fassen kann, sobald der Bügel in die Höhe des Maules 50 gekommen ist. Die Betätigung des Betätigungshebels 9 erfolgt zweckmässigerweise mittels eines Seilzuges. Durch die Arretiervorrichtung schnappt dann der Haken 49 über den Bügel 47.

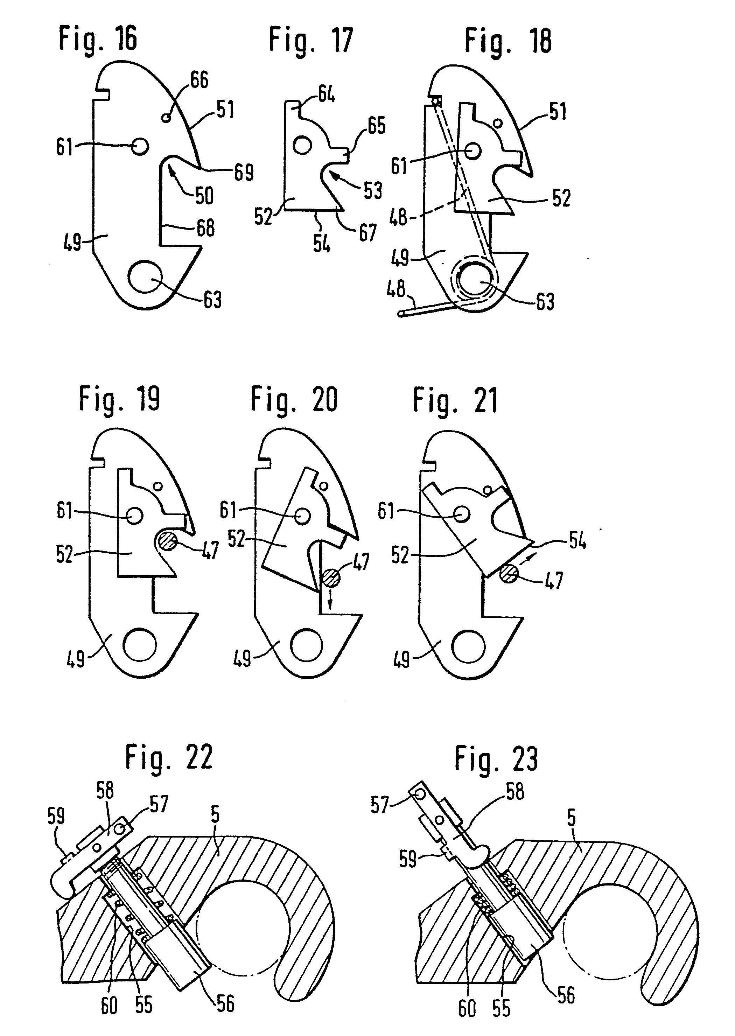

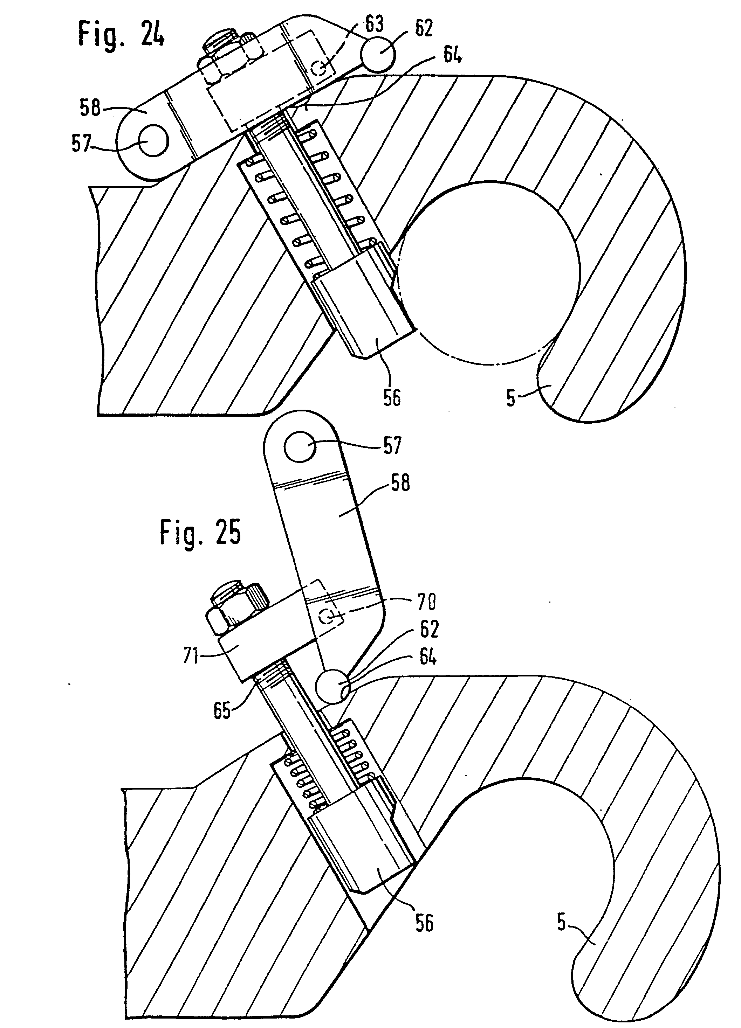

Für die Entarretierung muss der Haken 49 zurückverschwenkt werden. Das kann in einfacher Weise dann erfolgen, wenn an dem Haken 49 eine um den Zapfen 61 verschwenkbare Wippe 52 angebracht ist, die bei einer weiteren Verschwenkung des Betätigungshebels 9 in eine Stellung fällt, bei der es dem Bügel 47 möglich wird, aus dem Maul 50 des Hakens 49 herauszurutschen, wenn der Zug am den Betätigungshebel 9 betätigenden Seil aufhört. Der Zapfen 61 ist an dem verschwenkbaren Haken befestigt. Zweckmässigerweise ist die bauliche Gestaltung so erfolgt, dass der verschwenkbare Haken 49 eine zwischen zwei Stellungen verschwenkbare Wippe 52 trägt, die eine Ausnehmung 53 aufweist, die ebenfalls ein den Bügel 47 in ihrer einen Stellung aufnehmendes Maul bildet und die eine Kante 54 aufweist, die in der anderen Stellung das Maul 50 des Hakens 49 verschliesst und eine Gleitfläche für den Bügel 47 bildet. Die Wippe 52 weist zwei Anschläge 64, 65 auf, die die Verschwenkmöglichkeit der Wippe 52 begrenzen. Als Gegenanschlag dient ein in den verschwenkbaren Haken 49 fest eingesetzter Stift 66. Die eine Endstellung (Fig. 20) der Verschwenkmöglichkeit der Wippe ist dadurch gekennzeichnet, dass der Vorsprung 67 hinter der Kante 68 des Hakens zurückgetreten ist, die andere Endstellung (Fig. 21) ist dadurch gekennzeichnet, dass die Kante 54 das Maul 50 des verschwenkbaren Hakens verschliesst und die Spitze 69 am Zusammenstoss des Maules 50 mit der gekrümmten Fläche 51 (Gleitfläche) überragt. In Fig. 19 ist die Stellung gezeigt, in der der Bügel durch das Maul 50 des Hakens gehalten wird. In der Fig. 20 ist der Betätigungshebel 9 noch weiter verschwenkt, so dass die Wippe nicht mehr von dem Bügel 47 berührt wird. In Fig. 21 ist die Stellung der Wippe 52 in der Stellung gezeigt, in der das Maul 50 des Hakens verschlossen ist. Diese Stellung wird dadurch erreicht, dass der Zug am Seil, welches den Betätigungshebel 9 verschwenkt hat, aufhört, so dass der Hebel unter Einwirkung der Feder 12 zurückgezogen wird. Hierbei trifft der Bügel 47 auf die Unterkante 54 der Wippe auf, das ist diejenige Kante, die bei der Rückbewegung des Betätigungshebels durch ihre Anlage an der Kante 54 die Wippe verdreht, so dass die Wippe das Maul 50 des Hakens verschliesst.

Vorteilhaft ist es, wenn sich eine Seitenfläche des Maules der Wippe und die Kante des Maules des Hakens, an die sich der Bügel unter der Kraft der Feder 12 anlegt, in der Fangstellung decken.

Für die sichere Befestigung der Arbeitsgeräte ist es zweckmässig, wenn der Befestigungshaken mit einem Verschlussbolzen 56 versehen ist. Dieser Verschlussbolzen 56 soll möglichst ohne weitere Hilfsmittel eine in den Befestigungshaken 5 eingehängte Kugel oder ein ähnliches Befestigungsmittel sichern. Hierzu ist eine Feder 60 vorgesehen, die den Verschlussbolzen in der Verschlussstellung hält. Dieser Verschlussbolzen hindert natürlich während der Arbeit des Anbauens und Abbauens eines Arbeitsgerätes. Diese Hinderungen werden zweckmässigerweise dadurch vermieden, dass der Verschlussbolzen in seiner Offenstellung arretierbar ist. Das erfolgt dadurch, dass der Verschlussbolzen auf der dem Maul des Befestigungshakens 5 abgewandten Seite einen Griff 57 trägt, der an einem Ende eines Lenkers oder Bügels 58 angebracht ist, welcher verschwenkbar am Ende des Verschlussbolzens 56 gelagert ist und in seiner Länge auf der dem Griff 57 abgewandten Seite so bemessen ist, dass er in einer Stellung parallel zum Verschlussbolzen 56 steht und dessen freies Ende in einer Stellung hält, in der das Maul des Befestigungshakens 5 geöffnet ist. Dabei ist es zweckmässig, wenn die Enden des Bügels 58 von einem seitlich angebrachten Verbindungsstück 59 überbrückt sind.

Baulich lässt sich diese Ausführungsform sehr einfach dadurch realisieren, dass die Bohrung 55 im Befestigungshaken 5 und der Verschlussbolzen 56 abgesetzt sind und zwischen den Absetzungen eine Druckfeder 60 aufnehmen. Am Ende des Verschlussbolzens 56 ist ein Gewinde vorgesehen, auf welches ein Quader geschraubt ist, der mit einer Bohrung und einem Innengewinde versehen ist und der die Lager für den Lenker bzw. Bügel 58 trägt.

In den Fig. 24 und 25 ist eine andere Ausführungsform der Arretiervorrichtung des Verschlussbolzens 56 dargestellt. Diese zeichnet sich dadurch aus, dass das Lager 70 des Lenkers oder Bügels 58 in einem am Verschlussbolzen 56 befestigten Stein 71 ausserhalb der Achse des Verschlussbolzens 56 untergebracht ist, wobei der Abstand der Achse des Lagers 70 von der Achse des Verschlussbolzens 56 grösser oder gleich dem Abstand der Achse der Walze 72 von der Achse des Verschlussbolzens 56 ist, wenn die Walze 72 an dem Verschlussbolzen 56 anliegt. Durch die Abstände des Lagers 70 und der Walze 72 von der Achse des Verschlussbolzens 56 ist bereits eine gut wirksame Sicherung der Entarretierstellung des Verschlussbolzens 56 erzielt. Diese lässt sich aber noch weiter dadurch verbessern, dass im Befestigungshaken 5 eine Kerbe 73 neben dem Verschlussbolzen 56 angebracht ist, in die die Walze 72 einfällt.

Eine besonders günstige Ausführungsform, die sowohl leicht herstellbar als auch leicht montierbar ist, zeichnet sich dadurch aus, dass der Verschlussbolzen 56 ein Gewinde 74 trägt und dass der Stein 71 mittels dieses Gewindes 74 an dem Verschlussbolzen 56 befestigt ist.

In Fig. 13 ist teilweise im Schnitt die Lage der Kolbenstange 75 und des Kolbens 77 dargestellt. An dem Rohrstück, in welches die Kolbenstange 75 hereinragt, ist ein Druckluftfüllventil 76 eingesetzt, welches den Innenraum des Rohrstückes mit Druckluft oder Stickstoff, vorzugsweise mit einem Druck von 6–12 atü zu füllen gestattet. Hierdurch ist eine Ausführungsform erreicht, die sich dadurch auszeichnet, dass die Kolbenstange 75 beidseitig die Stirnseiten des Hydraulikzylinders durchsetzt und auf der einen Seite ein Befestigungsmittel, vorzugsweise einen Haken 5, trägt und auf der anderen Seite in einem geschlossenen Rohrstück untergebracht ist, welches an der einen Stirnseite des Hydraulikzylinders luftdicht befestigt und auf der abgelegenen Seite ein weiteres Befestigungsmittel, vorzugsweise ein Gelenk oder einen Haken trägt, dass dieses Rohrstück mit Druckluft gefüllt ist und dass es ein Füllventil 76 aufweist. Hierdurch wird erreicht, dass die Kolbenstange 75 und damit der Haken 5 selbsttätig und ohne Feder verschiebbar ist, so dass die Einstellung der gewünschten Oberlenkerlänge sehr einfach ist.

**Patentansprüche**

1. Verstellbarer Oberlenker einer Dreipunktaufhängevorrichtung an einem Schlepper mit einer aus einem doppeltwirkenden Hydraulikzylinder (1) und einer vom Schleppersitz aus mittels eines Betätigungshebels (9) bedienbaren Absperrvorrichtung versehen, die beiden Stirnseiten des Hydraulikzylinders (1) verbindenden Leitung bestehenden Arretiervorrichtung, dadurch gekennzeichnet, dass die Absperrvorrichtung ein Kugelhahn (7) ist, dessen die Kugel tragende Achse (8) mit einem Betätigungshebel (9) verbunden ist, dass an dem Betätigungshebel (9) Federn (12) angreifen, die den Betätigungshebel (9) in die Absperrstellung ziehen und dass eine lösbare, als Schnapper (49, 52) ausgebildete Arretierungsvorrichtung für den in die Offenstellung eingestellten Betätigungshebel (9) vorgesehen ist.

2. Oberlenker nach Anspruch 1, dadurch gekennzeichnet, dass an der Betätigungsvorrichtung (9) ein Zugseil (10) befestigt ist, welches zum Fahrerhaus des Schleppers geführt ist.

3. Oberlenker nach Anspruch 1, dadurch gekennzeichnet, dass in einer Erweiterung (38) der Leitung zum Kugelhahn (7) eine Drosselscheibe (35) eingelegt ist, die mindestens eine feine Bohrung (36) und auf einer Seite Ansätze (37) aufweist und für die in der Erweiterung ein Dichtungssitz (39) ausgebildet ist, der auf der den Ansätzen (37) der Drosselscheibe (35) abgewandten Seite angeordnet ist, wobei der Dichtungssitz (39) in der Flussrichtung des Druckmediums liegt, wenn es beim Verlängern der Länge des Oberlenkers fliesst.

4. Oberlenker nach Anspruch 1, dadurch gekennzeichnet, dass der der Betätigung des Kugelhahnes (7) dienende Betätigungshebel (9) eine Bohrung (44) aufweist, in die ein Federstecker (45) einsteckbar ist, dessen gradlinig verlaufender Teil hinter ein Paar von am Hydraulikzylinder (1) befestigten Haken (46) greift, während der gekrümmte Teil des Federsteckers (45) sich mit dem dem geraden Teil benachbarten Abschnitt in den Zwischenraum zwischen den beiden Haken (46) einschiebt.

5. Oberlenker nach Anspruch 1, dadurch gekennzeichnet, dass die als Schnapper ausgebildete Arretiervorrichtung aus einem am Betätigungshebel (9) angebrachten Bügel (47) und einem unter der Kraft einer Feder (48) verschwenkbaren Haken (49) besteht, dessen Maul (50) in der Arretierstellung über den Bügel (47) fasst und der an dem Hydraulikzylinder (1) oder an dem Gehäuse des Kugelhahnes (7) angebracht ist, wobei die an das Maul (50) anschliessende Fläche (51) des Hakens (49) gekrümmt ist.

6. Oberlenker nach Anspruch 1 und 5, dadurch gekennzeichnet, dass der verschwenkbare Haken (49) eine zwischen zwei Stellungen verschwenkbare Wippe (52) trägt, die eine Ausnehmung (53) aufweist, die ebenfalls ein den Bügel (47) in ihrer einen Stellung aufnehmendes Maul bildet und die eine Kante (54) aufweist, die in der anderen Stellung das Maul (50) des Hakens (49) verschliesst und eine Gleitfläche für den Bügel (47) bildet.

7. Oberlenker nach Anspruch 5 und 6, dadurch gekennzeichnet, dass sich eine Seitenfläche des Maules (53) der Wippe (52) und die Kante des Maules (50) des Hakens (49), an die sich der Bügel (47) unter der Kraft der Feder (12) anlegt, in der Fangstellung decken.

8. Oberlenker nach Anspruch 1, dadurch gekennzeichnet, dass der Befestigungshaken (5) mit einer Bohrung (55) versehen ist, in der ein unter der Kraft einer Feder (61) vor das Maul des Befestigungshakens (5) geschobener Verschlussbolzen (56) verschiebbar gelagert ist.

9. Oberlenker nach Anspruch 8, dadurch gekennzeichnet, dass der Verschlussbolzen (56) auf der dem Maul des Befestigungshakens (5) abgewandten Seite einen Griff (57) trägt, der an einem Ende eines Lenkers oder Bügels (58) angebracht ist, welcher verschwenkbar am Ende des Verschlussbolzens (56) gelagert ist und in seiner Länge auf der dem Griff (57) abgewandten Seite so bemessen ist, dass er in einer Stellung parallel zum Verschlussbolzen (56) steht und dessen freies Ende in einer Stellung hält, in der das Maul des Befestigungshakens (5) geöffnet ist.

10. Oberlenker nach Anspruch 8 und 9, dadurch gekennzeichnet, dass die Enden des Bügels (58) von einem seitlich angebrachten Verbindungsstück (59) überbrückt sind.

11. Oberlenker nach Anspruch 8 bis 10, dadurch gekennzeichnet, dass die Bohrung (55) im Befestigungshaken (5) und der Verschlussbolzen (56) abgesetzt sind und zwischen den Absetzungen eine Druckfeder (60) aufnehmen.

12. Oberlenker nach Anspruch 10, dadurch gekennzeichnet, dass der Lenker oder Bügel (58) an seinem, dem Griff (57) abgewandten Ende eine Walze (72) trägt, deren Achse parallel zur Achse des Lagers (70) angeordnet ist, und dass das Lager (70) des Lenkers oder Bügels (58) in einem am Verschlussbolzen (56) befestigten Stein (71) ausserhalb der Achse des Verschlussbolzens (56) grösser oder gleich dem Abstand der Achse der Walze (72) von der Achse des Verschlussbolzens (56) ist, wenn die Walze (72) an dem Verschlussbolzen (56) anliegt.

13. Oberlenker nach Anspruch 12, dadurch gekennzeichnet, dass im Befestigungshaken (5) eine Kerbe (73) neben dem Verschlussbolzen (56) angebracht ist, in die die Walze (72) einfällt.

14. Oberlenker nach Anspruch 12, dadurch gekennzeichnet, dass der Verschlussbolzen (56) ein Gewinde (74) trägt und dass der Stein (71) mittels dieses Gewindes (74) an dem Verschlussbolzen (56) befestigt ist.

15. Oberlenker nach Anspruch 1, dadurch gekennzeichnet, dass die Kolbenstange (75) beidseitig die Stirnseiten des Hydraulikzylinders durchsetzt und auf einer Seite ein Befestigungsmittel, vorzugsweise einen Haken (5), trägt und auf der anderen Seite in einem geschlossenen Rohrstück untergebracht ist, welches an der einen Stirnseite des Hydraulikzylinders (1) luftdicht befestigt und auf der abgelegenen Seite ein weiteres Befestigungsmittel, vorzugsweise ein Gelenk oder einen Haken trägt, dass dieses Rohrstück mit Druckluft gefüllt ist und dass es ein Füllventil (76) aufweist.

**Claims**

1. An adjustable overhead control lever for a three-point suspension device on a tractor having a locking device which consists of a double-acting hydraulic cylinder (1), a closing device which can be operated from the tractor seat by means of an actuating lever (9), and a line connecting the two ends of the hydraulic cylinder (1), characterised in that the closing device is a ball tap (7), the axle (8) of which carrying the ball is connected to an actuating lever (9); that springs (12) act on the actuating lever (9) to pull the actuating lever (9) into the closing position; and a releasable locking means is provided in the form of a latch (49, 52), for the actuating lever (9) when set in the open position.

2. An overhead control lever according to Claim 1, characterised in that a traction rope (10), which is led to the driver's compartment of the tractor, is secured to the actuating device (9).

3. An overhead control lever according to Claim 1, characterised in that in a widened portion (38) of the line to the ball tap (7) a throttle plate (35) is inserted, which has at least one fine bore (36) and extensions (37) on one side, and for which a sealing seat (39) is formed in the widened portion, which sealing seat is arranged on the side of the throttle plate (35) facing away from the extensions (37), the sealing seat being arranged in the direction of flow of the pressure medium, as it flows on extending the length of the overhead control lever.

4. An overhead control lever according to Claim 1, characterised in that the actuating lever (9), which serves for the actuation of the ball tap (7), has a bore (44) into which a spring insert (45) can be inserted, the linearly extending part of which engages behind a pair of hooks (46) which are secured to the hydraulic cylinder (1), whilst the bent part of the spring insert (45), together with the section adjacent to the straight part, slides into the interspace between the two hooks (46).

5. An overhead control lever according to Claim 1, characterised in that the locking means in the form of a latch consists of a stirrup (47), which is fixed on the actuating lever (9), and a hook (49) which can be swivelled under the force of a spring (48) and whose jaw (50) grips over the stirrup (47) in the locking position and which is secured to the hydraulic cylinder (1), or to the housing of the ball tap (7), the surface (51) of the hook (49) which adjoins the jaw (50) being curved.

6. An overhead control lever according to Claim 1 and 5, characterised in that the swivelling hook (49) carries a rocker (52) which can be swivelled between two positions and which has a recess (53) likewise forming a jaw which receives the stirrup (47) in its one position, and which recess has an edge (54) which locks the jaw (50) of the hook (49) in the other position and formes a sliding surface for the stirrup (47).

7. An overhead control lever according to Claim 5 and 6, characterised in that a lateral surface of the jaw (53) of the rocker (52) and the edge of the jaw (50) of the hook (49) against which the stirrup (47) abuts under the force of the spring (12), coincide with one another in the caught position.

8. An overhead control lever according to Claim 1, characterised in that the fastening hook (5) is provided with a bore (55), in which a locking bolt (56), which is pushed in front of the jaw of the fastening hook (5) under the force of a spring (61), is displaceably mounted.

9. An overhead control lever according to Claim 8, characterised in that, on the side facing away from the jaw of the fastening hook (5), the locking bolt (56) carries a handle (57), which is secured to one end of a control lever or stirrup (58), which is swivellably mounted at the end of the locking bolt (56), and which, at the side facing away from the handle (57), is so dimensioned as regards its length that it stands in a position parallel to the locking bolt (56) and holds the free end thereof in a position in which the jaw of the fastening hook (5) is open.

10. An overhead control lever according to Claim 8 and 9, characterised in that the ends of the stirrup (58) are bridged by a laterally mounted connecting piece (59).

11. An overhead control lever according to Claim 8 to 10, characterised in that the bore (55) in the fastening hook (5) and the locking bolt (56) are stepped apart and receive a pressure spring (60) between the stepped members.

12. An overhead control lever according to Claim 10, characterised in that, at its end facing away from the handle (57), the control lever or stirrup (58) carries a roller (72), the axis of which is arranged parallel to the axis of the bearing (70); and that the bearing (70) of the control lever or stirrup (58) is in a block (71), which is secured on the locking bolt (56) outside the axis of the locking bolt (56) at a distance greater than or identical to the distance of the axis of the roller (72) from the axis of the locking bolt (56) when the roller (72) abuts against the locking bolt (56).

13. An overhead control lever according to Claim 12, characterised in that a groove (73) is formed in the fastening hook (5) beside the locking bolt (56) into which the roller (72) dips.

14. An overhead control lever according to Claim 12, characterised in that the locking bolt (56) carries a thread (74) and that the block (71) is secured to the locking bolt (56) by means of this thread (74).

15. An overhead control lever according to Claim 1, characterised in that the piston rod (75) passes through the ends of the hydraulic cylinder on both sides and carries a fastening element, preferably a hook (5), on one side and is accommodated in a closed pipe section on the other side, which pipe section is secured to the one end face of the hydraulic cylinder (1) in air-tight manner and carries a further fastening means, preferably a hinge or a hook, on the further side; and that the pipe section is filled with compressed air and has a filling valve (76).

**Revendications**

1. Barre supérieure réglable d'un dispositif de suspension par trois points sur un tracteur comportant un cylindre hydraulique (1) à double effet et un dispositif d'arrêt pourvu d'un dispositif de blocage, manœuvrable à partir du siège du tracteur au moyen d'un levier d'actionnement (9), et se composant d'un conduit reliant les deux côtés frontaux du cylindre hydraulique, caractérisée en ce que le dispositif de blocage est un robinet à boisseau sphérique (7), dont l'axe (8) portant le boisseau est relié à un levier d'actionnement (9), en ce que sur le levier d'actionnement (9) s'accrochent des ressorts (12) qui tirent le levier d'actionnement (9) dans la position de blocage et en ce qu'il est prévu un dispositif d'arrêt, démontable et agencé sous forme d'un encliquetage (49, 52), pour le levier d'actionnement (9) réglé dans la position d'ouverture.

2. Barre supérieure selon la revendication 1, caractérisée en ce que sur le dispositif d'actionnement (9) est fixé un câble de traction (10) qui est guidé vers la cabine du tracteur.

3. Barre supérieure selon la revendication 1, caractérisée en ce qu'il est prévu dans un élargissement (38) du conduit aboutissant au robinet à boisseau sphérique (7) un disque d'étranglement (35) qui comporte au moins un trou fin (36) et sur un côté des appendices (37) et pour lequel est formé dans l'élargissement un siège d'étanchéité (39), qui est placé sur le côté opposé aux appendices (37) du disque d'étranglement (35), le siège d'étanchéité (39) étant disposé dans la direction d'écoulement du fluide sous pression lorsque celui-ci s'écoule lors de l'augmentation de longueur de la barre supérieure.

4. Barre supérieure selon la revendication 1, caractérisée en ce que le levier d'actionnement (9) servant à manœuvrer le robinet à boisseau sphérique (7) comporte un trou (44) dans lequel peut être engagée une fiche élastique (45) dont une partie de profil rectiligne s'accroche en arrière d'une paire de crochets (46) fixés sur le cylindre hydraulique (1) tandis que la partie incurvée de la fiche élastique (45) s'engage par sa portion adjacente à la partie droite dans l'intervalle entre les deux crochets (46).

5. Barre supérieure selon la revendication 1, caractérisée en ce que le dispositif d'arrêt agencé sous forme d'un encliquetage se compose d'un étrier (47) disposé sur le levier d'actionnement (9) et d'un crochet (49) pouvant pivoter sous l'action d'un ressort (48), dont l'embouchure (50) s'accroche dans la position d'arrêt du dessus de l'étrier (47) et qui est disposé sur le cylindre hydraulique (1) ou sur le corps de robinet à boisseau sphérique (7), la surface (51) du crochet (49) suivant l'embouchure (50) étant incurvée.

6. Barre supérieure selon les revendications 1 et 5, caractérisée en ce que le crochet pivotant (49) porte un culbuteur (52) pouvant pivoter entre deux positions et qui comporte un évidement (53) qui forme également une embouchure recevant l'étrier dans une de ses positions et qui comporte un bord (54) qui ferme dans l'autre position l'embouchure (50) du crochet (49) et constitue une surface de glissement pour l'étrier (47).

7. Barre supérieure selon les revendications 5 et 6, caractérisée en ce qu'une surface latérale de l'embouchure (53) du culbuteur (52) et le bord de l'embouchure (50) du crochet (49), contre lequel s'applique l'étrier (47) sous l'action du ressort (12) se recouvrent dans la position de retenue.

8. Barre supérieure selon la revendication 1, caractérisée en ce que le crochet de fixation (5) est pourvu d'un trou (55) dans lequel est monté de façon coulissante un boulon de fermeture (56) poussé sous l'action d'un ressort (61) devant l'embouchure du crochet de fixation (5).

9. Barre supérieure selon la revendication 8, caractérisée en ce que le boulon de fermeture (56) porte, sur le côté opposé à l'embouchure du crochet de fixation (5), une poignée (57), qui est placée à une extrémité d'un levier ou étrier (58), qui est monté de façon pivotante à l'extrémité du boulon de fermeture (56) et dont la longueur du côté opposé à la poignée (57) est dimensionnée de telle sorte que, dans une position, il soit placé parallèlement au boulon de fermeture (56) et maintienne son extrémité libre dans une position où l'embouchure du crochet de fixation (5) est ouverte.

10. Barre supérieure selon les revendications 8 et 9, caractérisée en ce que les extrémités de l'étrier (58) sont chevauchées par une pièce de liaison (59) disposée latéralement.

11. Barre supérieure selon les revendications 8 à 10, caractérisée en ce que le trou (55) ménagé dans le crochet de fixation (5) et le boulon de fermeture (56) sont pourvus de gradins et reçoivent entre les gradins un ressort de compression (60).

12. Barre supérieure selon la revendication 10, caractérisée en ce que le levier ou étrier (58) porte à son extrémité opposée à la poignée (57) un rouleau (72) dont l'axe est disposé parallèlement à l'axe du palier (70) et en ce que le palier (70) du levier ou étrier (58) est placé dans un bloc (71) fixé sur le boulon de fermeture (56) extérieurement à l'axe du boulon de fermeture (56), la distance entre l'axe du palier (70) et l'axe du boulon de fermeture (56) étant supérieure ou égale à la distance entre l'axe du rouleau (72) et l'axe du boulon de fermeture (56) quand le rouleau (72) s'applique contre le boulon de fermeture (56).

13. Barre supérieure selon la revendication 12, caractérisée en ce qu'il est prévu dans le crochet de fixation (5) une saignée (73) placée à côté du boulon de fermeture (56) et dans laquelle pénètre le rouleau (72).

14. Barre supérieure selon la revendication 12, caractérisée en ce que le boulon de fermeture (56) porte un filetage (74) et en ce que le bloc (71) est fixé à l'aide de ce filetage (74) sur le boulon de fermeture (56).

15. Barre supérieure selon la revendication 1, caractérisée en ce que la tige de piston (75) traverse des deux côtés les côtés frontaux du cylindre hydraulique et porte d'un côté un moyeu de fixation, de préférence un crochet (5) et est logée de l'autre côté dans une pièce tubulaire fermée qui est fixée de façon étanche à l'air sur un des côtés frontaux du cylindre hydraulique et qui porte sur le côté opposé un autre moyen de fixation, de préférence une articulation ou un crochet, en ce que cette pièce tubulaire est remplie d'air et en ce qu'elle comporte une soupape de remplissage (76).

Fig. 1

Fig. 2

0 041 096

Fig. 3

Fig. 4

Fig. 5

Fig. 6

0 041 096

Fig. 7

Fig. 8

Fig. 9

Fig. 10

3  2  31  34  4 33 5

3  2  31  30  34  32  4  33  5

35  36  39  38  37

36  35  37

17

0 041 096

Fig. 11

Fig. 12

Fig. 13

Fig. 14

Fig. 15

0 041 096

## Fig. 16

66
51
61
69
50
49
68
63

## Fig. 17

64
65
53
52
54
67

## Fig. 18

51
61
52
48
49
48
63

## Fig. 19

61
52
47
49

## Fig. 20

61
52
47
49

## Fig. 21

61
52
54
47
49

## Fig. 22

58
59
57
5
60
55
56

## Fig. 23

57
58
5
59
60
55
56

Fig. 24

63 62 64 58 57 56 5

Fig. 25

57 58 70 62 64 71 65 56 5